# EUROPEAN PATENT APPLICATION

(11) **EP 2 561 748 A1**
(43) Date of publication of application: **27.02.2013**
(21) Application number: 11178786.7
(22) Date of filing: 25.08.2011
(51) Int. Cl.: A01G 3/053

(54) **Hedge cutters**

(71) Applicant: Robert Bosch GmbH, 70442 Stuttgart (DE)
(72) Inventor: Lister, John, Bury St. Edmunds, Suffolk IP32 7PT (GB)

(57) **Abstract**

The present invention relates to hedge cutters. We describe a hollow section blade guide (14) for a hedge cutter. In preferred embodiments, the one hollow section blade guide (14) has a cross-section which forms a closed section. Preferably, the guide (14) has a substantially planar base.

## Description

### FIELD OF INVENTION

The present invention relates to hedge cutters.

### BACKGROUND

A conventional hedge cutter typically comprises a housing, housing a prime mover such as an electric motor or petrol engine, and a pair of co-axial elongate metal cutter members each with a series of elongated blades or cutting teeth protruding from each side at regular intervals.

The metal cutter members are arranged so that one of them is fixed with respect to the housing and the other movable in a reciprocating manner by means of the prime mover. In an alternative arrangement, both blades are moveable in an out-of-phase reciprocating manner, through operative coupling to a cam member rotatable by means of the prime mover, optionally via a gear arrangement. The or each reciprocatable member is thereby caused to move with a backwards and forwards motion in a reciprocating movement causing the blades in respective cutter members to scissor over each other and thereby cutting anything which is between adjacent blades.

The cutter members are guided longitudinally by a blade guide or pair of blade guides, usually in the form of a metal plate or bar, typically formed of pressed steel or aluminium. The guides provide rigidity to the cutter members, ensuring that if the hedge cutter is caught in foliage, for example, it can withstand the force of the user pulling it free. The guides also ensure that the blades do not move laterally and do not buckle.

A problem with this arrangement however, is that commonly available systems are relatively heavy. Prior attempts to reduce the weight of the system have led to the extensive use of aluminium and a two-part blade guide (one part above the blade, the other beneath it).

The present invention seeks to improve further on these developments.

### SUMMARY OF THE INVENTION

Accordingly, in its broadest sense, the present invention provides a hollow section blade guide for a hedge cutter or hedge trimmer. More specifically, the present invention provides a cutting tool comprising at least one oscillating member having a range of oscillation, comprising; one or more elongate slots in each of the at least one oscillating members, with a length at least equal to the range of oscillation of the at least one oscillating member; at least one hollow support member positioned on one side of the at least one oscillating member; attachment means provided to connect said hollow support to the at least one oscillating member so as to allow oscillating movement of said member relative to said hollow support within a range equal to that of the at least one elongate slot; a corresponding receiving means for receiving said attachment means is provided in the support member; wherein the attachment means passes through at least one elongate slot into said corresponding receiving means.

Preferably the at least one oscillating member comprises a metal member with regularly spaced blades protruding laterally from each side of the member.

Preferably, the upper section is a hollow support member, having a cross-section, perpendicular to the axis of oscillation, which forms a closed-section.

Preferably, the hollow support member has a substantially planar base.

Preferably, the hollow support member has a generally domed upper surface.

Alternatively, the hollow support section has a rectangular cross-section.

Preferably, the attachment means comprises a series of threaded members passing through the lower support member, through the elongate slots in the at least one oscillating member and into the upper support member.

Preferably, the upper support member is provided with substantially thickened wall sections at the centre of the base, to receive said threaded members.

Preferably the at least one oscillating member moves in a reciprocating manner.

Preferably, there are two support members, one upper and one lower positioned either side of the cutter members.

Preferably, the lower support member is a flat plate.

Preferably, the cutting tool is a hedge cutter.

### BRIEF DESCRIPTION OF DRAWINGS

The above and other aspects of the present invention will now be described in further detail by way of example only, with reference to the accompanying drawings, in which:
Figure 1 is a perspective view of an assembled blade and drive unit for a hedge cutter in accordance with the present invention; and
Figure 2 is a cross-section view of an embodiment of a cutting tool in accordance with the present invention;
Figure 3 is a disassembled view of the blades and support sections;
Figure 4 is a cross-section of an embodiment of the invention; and
Figure 5 is a cross section of an alternative embodiment.

### DETAILED DESCRIPTION

A conventional hedge cutter comprises two elongate cutter members which reciprocate with respect to each other, with either one cutter member fixed and the other caused to reciprocate against it or both cutter members are caused to reciprocate in equal and opposite manner. The cutter members are driven by means of a cam element driven by the output shaft of a prime mover, typically in the form of an electric motor or small petrol engine. Typically, the hedge cutter has a housing for the prime mover, also providing user operable switches.

In order to prevent the blades from buckling or moving laterally whilst in operation, guide members are typically provided to hold the blades within a limited range of motion. However, in commonly available systems, this arrangement results in relatively heavy products, which can be a problem for some users of the tool. It is this problem which the present invention addresses.

In accordance with the present invention, the cutting tool uses a hollow member to act as the blade guide, providing a higher stiffness to weight ratio. The hollow member has a cross-section perpendicular to the axis of oscillation which forms a closed section, enabling screws and screw holes in the guide to be hidden as they are beneath the top surface of the loop.

Preferably, the cross section is provided with a substantially thicker wall section at the centre of the base. This extends along the full length of the member and enables the threaded members to be received directly into the material of the member.

In the embodiment shown, there are two cutter members, each with blades protruding laterally at regular intervals, either side of the blade member. One of the blade members may be fixed relative to the guides and the housing (omitted for clarity), with the other moving in a reciprocating action. Alternatively, both of the cutter members moves in a reciprocating manner.

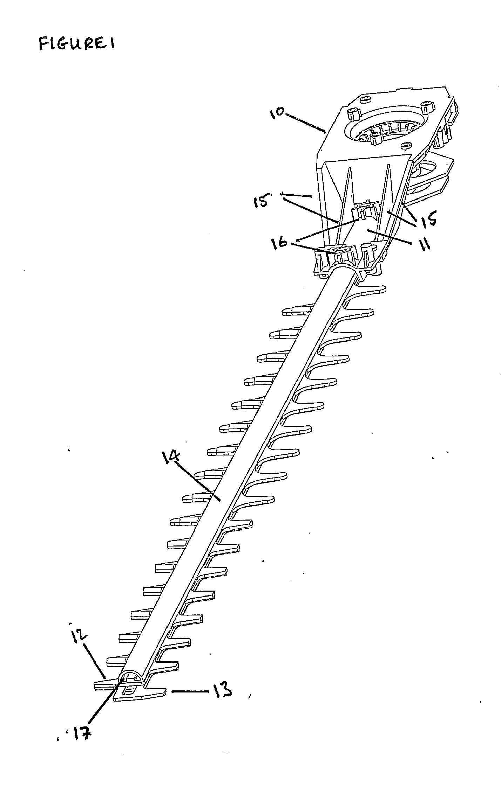

Figure 1 is a perspective view of an embodiment of an assembled blade and drive unit for a hedge cutter in accordance with the invention. The housing unit 10 is provided to mount a prime mover such as an electric motor (not shown). The housing is provided with a tubular section 11 into which the assembled cutter members 12, 13 and upper support member 14 and lower support member (not shown) are insertable. The tubular section 11 is supported by struts 15 attached to the housing 10. The assembled cutter and support members are held in the tubular section by means of screws or bolts 16.

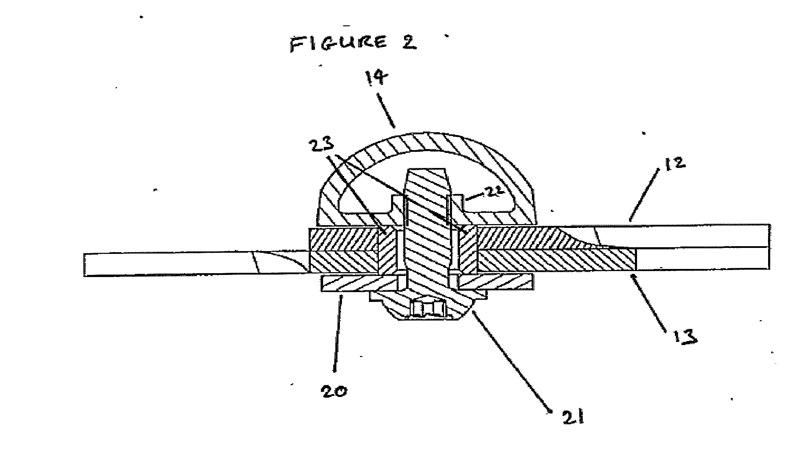

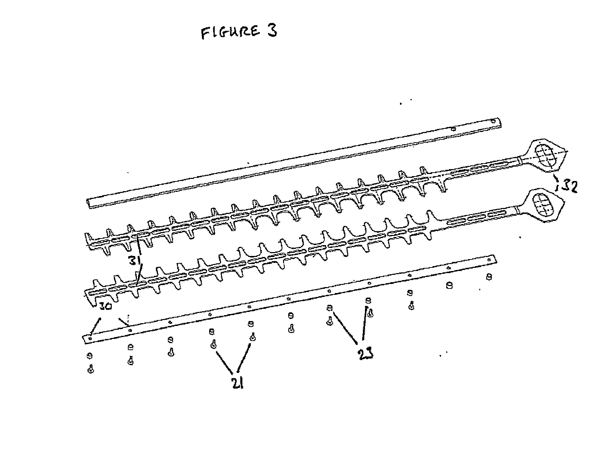

Referring to figures 2 and 3, there is shown an upper hollow support member 14, a lower, solid support member 20 and two cutter members 12, 13. The upper and lower support members 14, 20 and the cutter members 12, 13 are attached by means of a series of threaded fixing elements such as screws (of which one 21 is shown) along the length of the cutter members. The threaded fixing elements pass through the apertures 30 in the lower support member, through the elongate slots 31 in the cutter members and are received in the upper support member in thickened sections 22. Cylindrical spacers 23 are provided to hold the support members at the correct distance apart. The spacers provide a small clearance so that the cutter members are free to oscillate, whilst enabling the upper and lower support members to be fixed together solidly as a rigid unit.

Two cutter members are shown here. At least one of these moves in the assembled product in an oscillating manner relative to the support members and the housing.

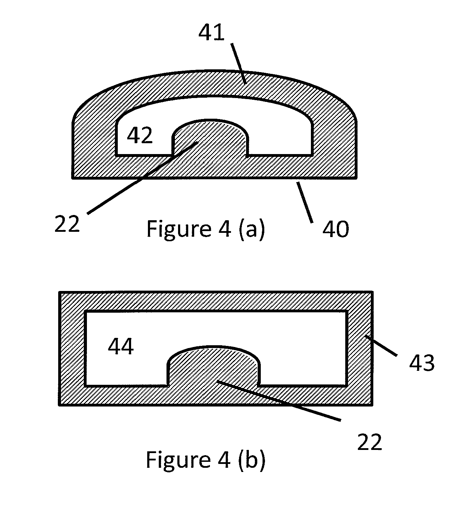

In a preferred embodiment, the hollow support member has a closed cross-section 17, as shown in Figure 1, and covers the screw ends received in the hollow member. The closed cross-section extends for the length of the hollow member, except where holes are provided for receiving threaded fixing elements. Typically this could be formed from an extruded aluminium section. In the embodiment shown, the closed cross-section hollow support member has a substantially planar base and a generally domed upper surface. The cross-section of such a member is illustrated in Figure 4, showing the planar base (40), the domed upper surface (41) and the hollow centre (42). The thickened section for receiving threaded members is shown (22). Alternative arrangements will be readily apparent to the skilled person, for example, having a rectangular cross-section. Such an arrangement is illustrated in Figure 5, which shows the rectangular cross-section (50) and the hollow centre (42). The thickened section for receiving threaded members is shown (22).

The elongate slots 31 have substantially the same length as the distance of the motion of the blades during their cutting action. This allows the reciprocating action to take place, whilst maintaining the blade on its correct axial alignment. Lateral movement of the blades is thereby prevented, as is buckling of the cutter members. One end 32 of each of the cutter members goes into the housing and connects to cam members which are rotatable by the electric motor.

The present invention is suitable for all types of hedge cutter, including, but not limited to corded (mains electricity powered), cordless (battery powered) and petrol powered devices.

## Claims

1. A cutting tool comprising at least one oscillating member (12) having a range of oscillation, comprising; one or more elongate slots (31) in each of the at least one oscillating members, with a length at least equal to the range of oscillation of the at least one oscillating member; at least one hollow support member (14) positioned on one side of the at least one oscillating member; attachment means (21) provided to connect said hollow support member to the at least one oscillating member so as to allow oscillating movement of said member relative to said hollow support member within a range equal to that of the at least one elongate slot; a corresponding receiving means (22) for receiving said attachment means is provided in the hollow support member wherein the attachment means passes through at least one elongate slot into said corresponding receiving means.

2. A cutting tool as claimed in claim 1, wherein the at least one hollow support member has a cross-section perpendicular to the oscillation motion of the oscillating members, which forms a closed section (17).

3. A cutting tool as claimed in claim 1 or claim 2, wherein the closed cross-section hollow support member (14) has a substantially planar base (40).

4. A cutting tool as claimed in claim 3, wherein the closed section hollow support member has a generally domed upper surface (41).

5. A cutting tool as claimed in claim 1 or claim 2 wherein the closed section hollow support member has a rectangular cross-section (43).

6. A cutting tool as claimed in any one of claims 1 to 5, wherein the at least one oscillating member comprises a metal member with regularly spaced blades (17) protruding laterally from each side of the member.

7. A cutting tool as claimed in any one of claims 1 to 6 further comprising a blade-supporting member fixed relative to the support members and housing (10).

8. A cutting tool as claimed in any one of claims 1 to 7 wherein the attachment means comprises at least one threaded member (21) passing through the at least one elongate slot into receiving means in the hollow support member.

9. A cutting tool as claimed in claim 8, in which a thickened section (22) is provided in the hollow section to receive said threaded member.

10. A cutting tool as claimed in any one of claims 1 to 9, wherein the oscillating motion of the oscillating member is a reciprocating action.

11. A cutting tool as claimed in any one of claims 1 to 10, wherein there are two support members, an upper support member (14) and a lower support member (20), positioned either side of the at least one oscillating member.

12. A cutting tool as claimed in claim 11 wherein the lower support member (20) is a flat plate.

13. A hedge cutter or hedge trimmer comprising a cutting tool as claimed in any preceding claim; and a prime mover adapted to drive, in use, motion of said at least one oscillating member.
